# EUROPÄISCHE PATENTSCHRIFT

(11) **EP 3 487 652 B1**
(45) Veröffentlichungstag und Bekanntmachung des Hinweises auf die Patenterteilung: **19.10.2022**
(21) Anmeldenummer: 17748428.4
(22) Anmeldetag: 21.07.2017
(51) Int. Cl.: B23C 3/12, B27D 5/00

(54) **BEARBEITUNGSVORRICHTUNG UND BEARBEITUNGSVERFAHREN**
MACHINING APPARATUS AND MACHINING METHOD
SYSTÈME D'USINAGE ET PROCÉDÉ D'USINAGE

(30) Priorität: 22.07.2016 DE 102016213463
(43) Veröffentlichungstag der Anmeldung: 29.05.2019
(73) Patentinhaber: HOMAG Kantentechnik GmbH, 32657 Lemgo (DE)
(72) Erfinder: NOPE, Thomas, 32689 Kalletal (DE); BRINKMEIER, Michael, 32657 Lemgo (DE)
(74) Vertreter: Hoffmann Eitle
(86) Internationale Anmeldenummer: PCT/EP2017/068477
(87) Internationale Veröffentlichungsnummer: WO 2018/015536

(56) Entgegenhaltungen:
- EP-A1- 2 949 437
- EP-A2- 1 302 287
- DE-A1- 1 528 069
- DE-A1- 10 110 985
- FR-A- 1 467 986

## Beschreibung

### Technisches Gebiet

Die vorliegende Erfindung bezieht sich auf eine Vorrichtung zum Bearbeiten von Stirnkanten und/oder Ecken eines plattenförmigen Werkstücks, das bevorzugt zumindest abschnittsweise aus Holz, Holzwerkstoff, Kunststoff oder dergleichen ausgebildet ist, gemäß dem Oberbegriff von Patentanspruch 1. Ferner bezieht sich die vorliegende Erfindung auf ein Verfahren gemäß dem Oberbegriff von Patentanspruch 10.

### Stand der Technik

Aus der EP 1 479 467 A1 ist der Anmelderin eine Vorrichtung zum Bearbeiten von Stirnkanten und/oder Ecken eines plattenförmigen Werkstücks bekannt, die eine relativ zum Werkstück verfahrbar vorgesehene Bearbeitungseinrichtung aufweist. Die Bearbeitung erfolgt im Durchlaufverfahren, bei dem das Werkstück mit einer Fördereinrichtung relativ zur Bearbeitungseinrichtung bewegt und die Bearbeitungseinrichtung senkrecht zur Förderrichtung zum Kopierfräsen einer Werkstückkante verfahren wird.

Um das Kopierfräsen gegenüberliegender Stirnkanten im Durchlaufverfahren zu ermöglichen ist es erforderlich, zwei in Förderrichtung zueinander beabstandete Vorrichtungen gemäß der EP 1 479 467 A1 vorzusehen. Soll solch eine Bearbeitung mit lediglich einer Bearbeitungseinrichtung gemäß der EP 1 479 467 A1 erfolgen, erfordert dies nämlich eine Erstreckung des in Förderrichtung vorgesehen Verfahrbereichs der Bearbeitungseinrichtung, die sich in die Vorrichtung nicht wirtschaftlich integrieren lässt.

Nachteilig bei diesen Vorrichtungen im Stand der Technik, die zur Bearbeitung gegenüberliegender Stirnkanten im Durchlaufverfahren geeigneten sind, ist es, dass diese eine hohe Maschinenkomplexität und damit hohe Kosten aufweisen.

Die EP 2 949 437 A1, welche die Basis für den Oberbegriff des Anspruchs 1 darstellt, betrifft eine Ziehklingenvorrichtung zur spangebenden Bearbeitung eines auf eine Schmalseite einer Platte aufgebrachten Kantenstreifens, mit möglicherweise mehr als einem Ziehklingenaggregat, das einen Werkzeugträger aufweist, über dessen Umfang verteilt mehrere Ziehklingen lösbar gehalten sind und der mittels eines Drehantriebs um eine Drehachse drehbar ist zum wahlweisen Positionieren von einer der Ziehklingen in einer Schneidposition, in der die gewünschte Ziehklinge mit dem Kantenstreifen in Eingriff steht.

Eine derartige Ziehklingenvorrichtung kommt zur Bearbeitung eines Kantenstreifens zum Einsatz, der auf eine Schmalseite einer Platte aufgebracht wurde. Der Kantenstreifen wird in einer Kantenanleimmaschine mit der Schmalseite der Platte verleimt, wobei die Platte fortlaufend in einer Transportrichtung bewegt wird. Nach dem Abtrennen der über die in Transportrichtung vordere und hintere Endseite der Platte überstehenden Enden des Kantenstreifens wird der Kantenstreifen üblicherweise mittels eines Fräsaggregates bearbeitet, und anschließend unterliegt der Kantenstreifen einer Bearbeitung durch eine Ziehklingenvorrichtung, mit deren Hilfe dem Kantenstreifen die endgültige Außenkontur verliehen wird und etwaige Fräsmarken entfernt werden.

### Darstellung der Erfindung

Der vorliegenden Erfindung lag daher als technisches Problem zugrunde, eine Vorrichtung zum Bearbeiten von Stirnkanten und/oder Ecken eines plattenförmigen Werkstücks, das bevorzugt zumindest abschnittsweise aus Holz, Holzwerkstoff, Kunststoff oder dergleichen ausgebildet ist, bereitzustellen, die eine Bearbeitung der Stirnkanten und/oder Ecken im Durchlaufverfahren ermöglicht und dabei eine geringe Maschinenkomplexität sowie niedrige Investitionskosten aufweist.

Der Erfindung liegt der Gedanke zugrunde, dass die hohe Maschinenkomplexität und die hohen Investitionskosten der Vorrichtungen im Stand der Technik vor allem dadurch begründet sind, dass für die wirtschaftliche Bearbeitung von zwei gegenüberliegenden Stirnkanten und/oder Ecken zwei Bearbeitungseinrichtungen erforderlich sind, die jeweils eine eigene verfahrbare Stützeinrichtung aufweisen.

Die vorliegende Erfindung macht sich diese Erkenntnis zu Nutzen und stellt eine Vorrichtung zum Bearbeiten von Stirnkanten und/oder Ecken eines plattenförmigen Werkstücks, das bevorzugt zumindest abschnittsweise aus Holz, Holzwerkstoff, Kunststoff oder dergleichen ausgebildet ist, bereit mit zwei Bearbeitungseinrichtungen, die jeweils zum Bearbeiten einer Stirnkante und/oder Ecke des Werkstücks ausgebildet sind, und einer Fördereinrichtung zum Herbeiführen einer Relativbewegung zwischen dem Werkstück und den Bearbeitungseinrichtungen. Die Vorrichtung ist ausgestaltet, mit den zwei Bearbeitungseinrichtungen verschiedene, bevorzugt gegenüberliegende, Stirnkanten und/oder Ecken des Werkstücks zu bearbeiten. Gekennzeichnet ist die Vorrichtung dadurch, dass sie lediglich eine einzelne Stützeinrichtung aufweist, an der die zwei Bearbeitungseinrichtungen vorgesehen sind und die entlang der Förderrichtung des Werkstücks verschiebbar ist.

Unter einer einzelnen Stützeinrichtung wird erfindungsgemäß eine Stützeinrichtung verstanden, die für sich eine örtlich und strukturell abgeschlossene Baugruppe darstellt. Insbesondere stellt eine Anordnung, die aus zwei voneinander örtlich getrennt vorgesehen Baugruppen ausgebildet ist, an denen jeweils eine Bearbeitungseinrichtung vorgesehen ist, keine einzelne Stützeinrichtung im Sinne der vorliegenden Erfindung dar.

Die erfindungsgemäße Vorrichtung ermöglicht die Bearbeitung verschiedener Stirnkanten und/oder Ecken im Durchlaufverfahren und weist eine geringe Maschinenkomplexität sowie niedrige Kosten auf. So sind die zwei Bearbeitungseinrichtungen erfindungsgemäß nämlich an einer einzelnen Stützeinrichtung vorgesehen, sodass kostenintensive Führungen, Lagerungen und/oder Antriebe etc. lediglich einmalig erforderlich sind und gleichwohl eine Bearbeitung gegenüberliegender Stirnkanten und/oder Ecken im Durchlaufverfahren ermöglicht wird.

Bevorzugt ist die Verschiebebewegung der Stützeinrichtung entlang der Förderrichtung (F) antreibbar. Diese bevorzugte Ausführungsform führt zu dem Vorteil, dass die Bearbeitungseinrichtungen mit dem Werkstück in Förderrichtung verfahren werden können, sodass eine Bearbeitung von vor- und nachlaufender Werkstückseite ermöglicht wird, während das Werkstück gefördert wird. Dies führt zu einer Verringerung von Bearbeitungszeiten und damit einer verbesserten Produktivität. Die Verschiebebewegung der Stützeinrichtung kann pneumatisch und/oder elektrisch angetrieben werden. Hier sind jedoch auch andere Antriebsmechanismen denkbar.

Im Rahmen einer bevorzugten Ausführungsform sind die Bearbeitungseinrichtungen entlang der Stützeinrichtung gemeinsam verfahrbar vorgesehen, wobei diese Verfahrbewegung antreibbar sein kann. Insbesondere sind die Bearbeitungseinrichtungen senkrecht zur Förderrichtung verfahrbar ausgebildet. Vorteilhafterweise kann so eine Relativbewegung entlang der in Förderrichtung vor- und/oder nachlaufenden Werkstückseite herbeigeführt werden, sodass die Bearbeitung einer Stirnkante/Ecke dieser Seite ermöglicht wird.

Dabei können die Bearbeitungseinrichtungen in Förderrichtung des Werkstücks hintereinander angeordnet sein. Die Anordnung ist bevorzugt derart, dass eine Stirnkante und/oder Ecke einer in Förderrichtung vorlaufenden Seite des Werkstücks mit der in Förderrichtung vorderen, d.h. früher vom Werkstück passierten, Bearbeitungseinrichtung und eine Stirnkante und/oder Ecke einer in Förderrichtung nachlaufenden Seite des Werkstücks mit der in Förderrichtung hinteren, d.h. mit der vom Werkstück später passierten, Bearbeitungseinrichtung bearbeitet werden kann. Durch die derartige Anordnung der Bearbeitungseinrichtungen hintereinander kann der für die Bearbeitung von vor- und nachlaufender Werkstückseite im Durchlaufverfahren erforderliche Verfahrbereich der Stützreinrichtung minimiert werden. Kürzere Bearbeitungszeiten und damit eine erhöhte Produktivität sowie eine kompaktere Maschinenabmessung sind das Ergebnis.

In einer bevorzugten Ausführungsform weist eine Bearbeitungseinrichtung eine Tasteinrichtung auf, mit welcher ein Bearbeitungswerkzeug der Bearbeitungseinrichtung mit einem konstanten Abstand zum Werkstück entlang des Werkstücks geführt werden kann. Bevorzugt umfasst jede der Bearbeitungseinrichtungen solch eine Tasteinrichtung. Die Tasteinrichtung kann in Form einer Tastrolle und/oder Tastkurve ausgebildet sein. Solch eine Tasteinrichtung ermöglicht eine besonders hohe Bearbeitungsgüte. Insbesondere kann die Tasteinrichtung so ausgestaltet sein, dass der Abstand, mit welchem das Bearbeitungswerkzeug der Bearbeitungseinrichtung entlang des Werkstücks geführt werden kann, verstellbar ist. Besonders bevorzugt weist die Tasteinrichtung einen Antrieb zum Antreiben dieser Verstellbewegung auf. Das Vorsehen solch eines verstellbaren Abstands ermöglicht die Werkstückbearbeitung mit verschiedenen Werkzeugzustellungen zum Werkstück, wobei lediglich eine Bearbeitungseinrichtung mit einer Tasteinrichtung erforderlich ist. Im Ergebnis kann damit eine hohe Bearbeitungsvariabilität mit geringer Komplexität ermöglicht werden.

Im Rahmen einer bevorzugten Ausführungsform kann die Verstellung translatorisch, bevorzugt senkrecht zur Ebene der Werkstückauflage und besonders bevorzugt parallel zur Durchlauf- bzw. Förderrichtung erfolgen. Dies führt zu dem Vorteil, dass die Relativposition von Tasteinrichtung und Bearbeitungswerkzeug durch ausschließlich eine lineare Verstellbewegung verändert werden kann. Dies ermöglicht eine Lagerung mit hoher Steifigkeit und damit ein Verstellen mit hoher Genauigkeit.

Bevorzugt kann die Vorrichtung derart ausgestaltet und eingerichtet sein, dass die Verstellung des Abstands der Tasteinrichtung während der Bearbeitung erfolgen kann. Hierdurch ist eine kontinuierliche Veränderung der Zustellung von Werkzeug zu Werkstück realisierbar, sodass die Bearbeitungsvariabilität erhöht wird. Ferner können so beispielsweise eine Stirnkante und eine Ecke einer Werkstückseite mit unterschiedlichen Werkzeugzustellungen in einem Zug und damit besonders zeiteffizient bearbeitet werden.

In einer weiteren Zielrichtung stellt die vorliegende Erfindung ein Verfahren zum Bearbeiten von Stirnkanten und/oder Ecken eines plattenförmigen Werkstücks, das bevorzugt zumindest abschnittsweise aus Holz, Holzwerkstoff, Kunststoff oder dergleichen ausgebildet ist, bereit. Das Verfahren verwendet eine Vorrichtung gemäß einer der zuvor beschriebenen Ausführungsformen und umfasst das Fördern des Werkstücks in eine Förderrichtung mit der Fördereinrichtung, das Bearbeiten einer Stirnkante und/oder Ecke der in Förderrichtung vorlaufenden Werkstückseite mit einer der beiden Bearbeitungseinrichtungen, und das Bearbeiten der Stirnkante und/oder Ecke der in Förderrichtung nachlaufenden Werkstückseite mit der anderen Bearbeitungseinrichtung. Dabei erfolgt die Bearbeitung der beiden Stirnkanten und/oder Ecken während das Werkstück gefördert wird. Hinsichtlich der Vorteile des Verfahrens wird auf die zuvor in Verbindung mit der Vorrichtung beschriebenen Vorteile verwiesen.

### Kurze Beschreibung der Zeichnungen

Fig. 1 ist eine schematische Darstellung einer bevorzugten Ausführungsform der erfindungsgemäßen Vorrichtung in Vorderansicht.
Fig. 2 ist eine schematische Darstellung des Bearbeitungsverfahrens einer bevorzugten Ausführungsform der vorliegenden Erfindung.
Fig. 3 ist eine Vorderansicht einer bevorzugten Ausführungsform der erfindungsgemäßen Vorrichtung während der Bearbeitung einer vorlaufenden Kante des Werkstücks.
Fig. 4 ist eine Vorderansicht einer bevorzugten Ausführungsform der erfindungsgemäßen Vorrichtung während der Bearbeitung einer nachlaufenden Kante des Werkstücks.

### Detaillierte Beschreibung bevorzugter Ausführungsformen

Im Folgenden werden bevorzugte Ausführungsformen der vorliegenden Erfindung unter Bezugnahme auf die begleitenden Zeichnungen beschrieben.

Die bevorzugte Ausführungsform bezieht sich auf eine Vorrichtung 10 zum Bearbeiten von Stirnkanten und/oder Ecken eines plattenförmigen Werkstücks 1. Das Werkstück 1 besteht bevorzugt zumindest abschnittsweise aus Holz, Holzwerkstoff, Kunststoff oder dergleichen. Derartige Werkstücke kommen beispielsweise im Bereich der Möbel- und Bauelementeindustrie zum Einsatz. Es kann sich um eine Massivholz- oder Spanplatte, Leichtbauplatte, Sandwichplatte oder dergleichen handeln. Die vorliegende Erfindung ist dabei nicht auf derartige Werkstücke beschränkt.

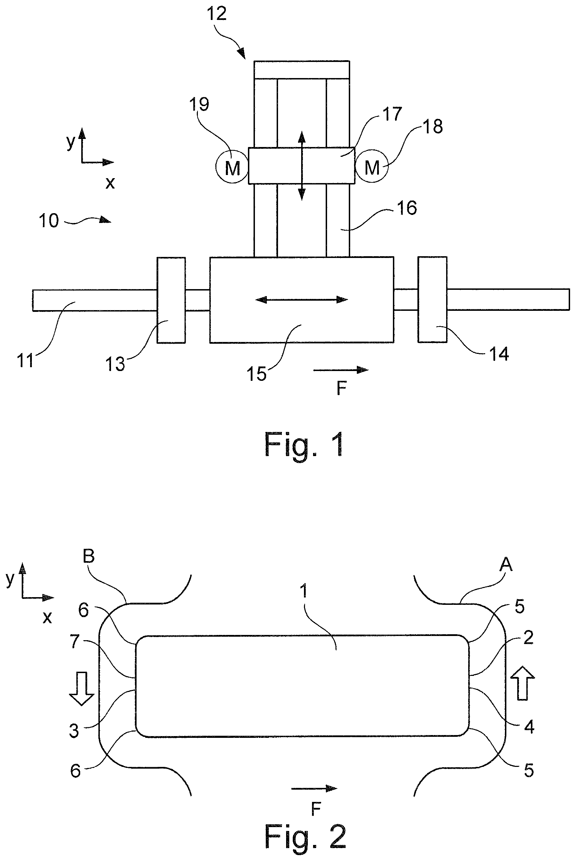

Im Folgenden wird die Vorrichtung 10 dieser bevorzugten Ausführungsform unter Bezugnahme auf Figs. 1, 3 und 4 im Detail beschrieben.

Die Vorrichtung 10 umfasst eine nicht gezeigte Fördereinrichtung zum Fördern des Werkstücks 1 in eine Förderrichtung F. Die Fördereinrichtung kann in Form eines Förderbands und/oder einer Förderkette ausgebildet sein. Auch andere Ausgestaltungen sind in diesem Zusammenhang denkbar. Die Fördereinrichtung ist derart ausgebildet, dass das Werkstück 1 im Durchlaufverfahren bearbeitet werden kann, bei dem eine Relativbewegung zur Werkstückbearbeitung zumindest auch durch die Fördereinrichtung herbeigeführt wird.

Darüber hinaus kann die Vorrichtung 10 eine Führung, insbesondere eine ortsfeste Linearführung, 11 aufweisen. Über die Führung 11 ist im Rahmen dieser bevorzugten Ausführungsform eine Stützeinrichtung 12 entlang der X-Richtung, also entlang der Förderrichtung F des Werkstücks 1, verfahrbar vorgesehen. Die Verfahrbewegung der Stützeinrichtung 12 in X-Richtung ist bevorzugt über mindestens eine, bevorzugt jedoch zwei Antriebseinheiten 13, 14 antreibbar. Der Antrieb kann hydraulisch, pneumatisch, elektrisch oder durch eine Kombination dieser realisiert werden. Auch andere Antriebsmechanismen sind hier denkbar.

Im Rahmen dieser bevorzugten Ausführungsform weist die Stützeinrichtung 12 einen entlang der Führung 11 verfahrbaren Schlitten 15 sowie eine Führungseinrichtung 16 auf, die auf dem Schlitten 15 angebracht ist und sich in die Y-Richtung erstreckt, wie in Figs. 1, 3 und 4 gezeigt. Die Führungseinrichtung 16 ist demnach mit dem Schlitten 15 über die Führung 11 in X-Richtung verfahrbar vorgesehen, wobei diese Verfahrbewegung über einen Antrieb 13, 14 antreibbar sein kann.

Darüber hinaus umfasst die Stützeinrichtung 12, wie in Figs. 1, 3 und 4 gezeigt, bevorzugt einen Verfahrschlitten 17, der entlang der Führungseinrichtung 16 in die Y-Richtung verfahrbar vorgesehen ist. Die Führungseinrichtung 16 ist dabei bevorzugt relativ zum Schlitten 15 fest positioniert. Der Verfahrschlitten 17 kann durch einen in Fig. 1 nicht dargestellten Antrieb in die Y-Richtung verfahren werden. Dieser Antrieb kann beispielsweise aber nicht ausschließlich durch eine hydraulische, elektrische oder mechanische Vorrichtung realisiert werden, wobei auch eine Kombination dieser denkbar ist.

In dieser bevorzugten Ausführungsform sind am Verfahrschlitten 17 zwei Bearbeitungseinrichtungen 18, 19 vorgesehen. Es können jedoch auch mehr Bearbeitungseinrichtungen am Verfahrschlitten 17 vorgesehen sein. Die Bearbeitungseinrichtungen 18, 19 sind in Vorderansicht auf die Vorrichtung 10, wie in Figs. 1, 3 und 4 gezeigt, seitlich fest und bevorzugt nicht verfahrbar am Verfahrschlitten 17 angebracht. Über den Schlitten 15 und den Verfahrschlitten 17 können die Bearbeitungseinrichtungen 18, 19 gemeinsam eine Bewegung innerhalb der X-Y Ebene ausführen.

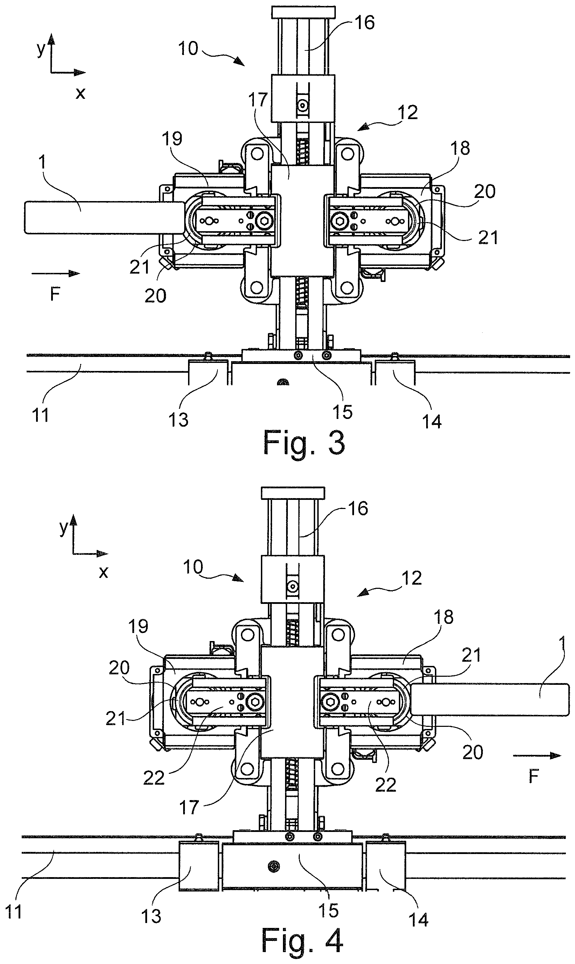

Wie in Figs. 3 und 4 gezeigt, weisen die Bearbeitungseinrichtungen 18, 19 dieser bevorzugten Ausführungsform jeweils ein Bearbeitungswerkzeug 20 zum Bearbeiten von Stirnkanten und/Ecken auf. Insbesondere handelt es sich bei dem Werkzeug um ein Fräswerkzeug, wobei hier auch anderen Werkzeuge denkbar sind.

Darüber hinaus umfasst jede Bearbeitungseinrichtung 18, 19 bevorzugt eine Tasteinrichtung 21. Die Tasteinrichtung 21 kann in Form einer Tastrolle und/oder Tastkurve ausgebildet sein. Die Tasteinrichtung 21 ist derart ausgestaltet, dass mittels dieser eine Führung des Bearbeitungswerkzeugs 20 der Bearbeitungseinrichtung 18 bzw. 19 entlang einer Werkstückseite mit einem konstanten Abstand zum Werkstück, d.h. mit konstanter Zustellpositionierung von Werkzeug zu Werkstück, möglich ist.

In dieser bevorzugten Ausführungsform weist jede der Bearbeitungseinrichtungen 18, 19 darüber hinaus bevorzugt eine Befestigungseinheit 22 auf, die in Fig. 3 und 4 zu sehen ist. Mit der Befestigungseinheit 22 dieser bevorzugten Ausführungsform ist über einen nicht gezeigten Antrieb eine translatorische Verstellung der Tasteinrichtung 21 in X-Richtung, d.h. in Förderrichtung F des Werkstücks 1, möglich. Somit kann mit der Befestigungseinheit 22 der Abstand zwischen Tasteinrichtung 21 und Bearbeitungswerkzeug 20 und damit zwischen Bearbeitungswerkzeug 20 und Werkstück 1 verändert werden. Folglich sind mit den Bearbeitungseinrichtungen 18, 19 dieser bevorzugten Ausführungsform verschiedene Zustellungen des Bearbeitungswerkzeugs 20 zum Werkstück 1 herbeiführbar. Besonders bevorzugt ist die translatorische Verstellung der Tasteinrichtung 21 dabei während der Bearbeitung möglich.

Im Folgenden wird eine bevorzugte Ausführungsform des Verfahrens der vorliegenden Erfindung unter Bezugnahme auf Fig. 2 beschrieben. Das Verfahren dieser bevorzugten Ausführungsform kann insbesondere mit der Vorrichtung 10 der zuvor beschriebenen bevorzugten Ausführungsform der erfindungsgemäßen Vorrichtung ausgeführt werden.

Im Rahmen des Verfahrens dieser bevorzugten Ausführungsform werden die Stirnkanten und Ecken von zwei gegenüberliegenden Schmalseiten des Werkstücks 1, insbesondere die in Förderrichtung F vorlaufende 2 und die in Förderrichtung F nachlaufende Seite 3 bearbeitet.

Hierzu wird das Werkstück 1 wird mit der nicht gezeigten Fördereinrichtung in die Förderrichtung F befördert. Dies erfolgt mit einer konstanten Fördergeschwindigkeit, die bevorzugt auch während der Werkstückbearbeitung aufrechterhalten wird.

Sobald sich die vorlaufende Seite 2 des Werkstücks 1 auf Höhe der in Vorderansicht (siehe Figs. 1, 3 und 4) linken Bearbeitungseinrichtung 19 befindet, wie in Fig. 3 gezeigt, führt die Bearbeitungseinrichtung 19 eine Bewegung entlang der in Fig. 2 gezeigten Trajektorie A relativ zum Werkstück 1, das bevorzugt mit konstanter Fördergeschwindigkeit weiter in Richtung F durch die Fördereinrichtung gefördert wird, aus. Hierzu wird die Einrichtung 19 über den Schlitten 15 entlang der Führung 11 verfahren, wobei diese Bewegung insbesondere durch einen Antrieb 13, 14 angetrieben wird. Parallel zu dieser Bewegung in X-Richtung wird der Verfahrschlitten 17 entlang der Führungseinrichtung 16 in Y-Richtung verfahren. Beide Bewegungen werden derart überlagert, dass eine Trajektorie von der Bearbeitungseinrichtung 19 abgefahren wird, welche mit der Werkstückkontur der vorlaufenden Seite 2 korrespondiert. Genauer gesagt setzt die Bearbeitungseinrichtung 19 unterhalb des Werkstücks 1 an der unteren Ecke 5 auf, überholt das Werkstück in Förderrichtung F, fährt vertikal in Y-Richtung bis zur oberen Ecke 5 herauf, fährt relativ zum Werkstück entgegen der Förderrichtung F zur Bearbeitung der oberen Ecke 5 und beendet die Bearbeitung. Die Stirnkante 4 und die Ecken 5 während dabei mit dem Bearbeitungswerkzeug 20 bearbeitet, wobei das Werkzeug mit der Tasteinrichtung 21 entlang des Werkstücks geführt wird.

Gegebenenfalls kann während der Bearbeitung der vorlaufenden Seite 2, beispielsweise zwischen der Bearbeitung der Stirnkante 4 und den Ecken 5 der vorlaufenden Seite 2, der Abstand zwischen Tasteinrichtung 21 und Werkzeug 20 verstellt werden, um so verschiedene Kantenüberstände entlang der vorlaufenden Seite 2 zu fertigen. Auch eine Fertigung mit konstantem Kantenüberstand ist hier jedoch denkbar.

Sobald sich die nachlaufende Seite 3 des Werkstücks 1, das mittels der Fördereinrichtung weiter in Förderrichtung F gefördert wird, auf Höhe der in Vorderansicht, siehe Figs. 1, 3 und 4, linken Bearbeitungseinrichtung 18 befindet, wie in Fig. 4 gezeigt, setzt die Bearbeitungseinrichtung 18 im Bereich der oberen Ecke 6 des Werkstücks 1 auf, fährt vertikal entlang der Stirnkante 7 der nachlaufenden Seite 3 relativ zum Werkstück 1 nach unten, eilt dem Werkstück 1 in Förderrichtung F entlang der unteren Ecke 6 nach und beendet die Bearbeitung.

Analog zur vorlaufenden Seite 2 kann auch bei der Bearbeitung der nachlaufenden Seite 3 der Abstand zwischen Tasteinrichtung 21 und Werkzeug 20 verstellt werden, um so verschieden Kantenüberstände entlang der nachlaufenden Seite 3 zu fertigen.

## Patentansprüche

1. Vorrichtung (10) zum Bearbeiten von Stirnkanten (4, 7) und/oder Ecken (5, 6) eines plattenförmigen Werkstücks (1), das bevorzugt zumindest abschnittsweise aus Holz, Holzwerkstoff, Kunststoff oder dergleichen ausgebildet ist, aufweisend:
zwei Bearbeitungseinrichtungen (18, 19), die jeweils zum Bearbeiten einer Stirnkante (4; 7) und/oder Ecke (5; 6) des Werkstücks (1) ausgebildet sind;
eine Fördereinrichtung zum Herbeiführen einer Relativbewegung zwischen dem Werkstück (1) und den Bearbeitungseinrichtungen (18, 19) in einer Förderrichtung (F);
wobei die Vorrichtung (10) ausgestaltet ist, mit den zwei Bearbeitungseinrichtungen (18, 19) verschiedene, bevorzugt gegenüberliegende, Stirnkanten (4, 7) und/oder Ecken (5, 6) des Werkstücks (1) zu bearbeiten;
wobei die Vorrichtung (10) ferner eine einzelne Stützeinrichtung (12) aufweist, an der beide Bearbeitungseinrichtungen (18, 19) vorgesehen sind,
**dadurch gekennzeichnet, dass** die Stützeinrichtung (12) entlang der Förderrichtung (F) des Werkstücks (1) verschiebbar vorgesehen ist.

2. Vorrichtung (10) nach Anspruch 1, wobei die Verschiebebewegung der Stützeinrichtung entlang der Förderrichtung (F) antreibbar ist.

3. Vorrichtung (10) nach Anspruch 2, bei der die Verschiebebewegung der Stützeinrichtung (12) pneumatisch und/oder elektrisch antreibbar ist.

4. Vorrichtung (10) nach einem der vorherigen Ansprüche, bei der die Bearbeitungseinrichtungen (18, 19) entlang der Stützeinrichtung (12) bevorzugt senkrecht zur Förderrichtung (F) gemeinsam verfahrbar vorgesehen sind, wobei die Verfahrbewegung bevorzugt antreibbar ist.

5. Vorrichtung (10) nach einem der vorhergehenden Ansprüche, bei der die Bearbeitungseinrichtungen (18, 19) in Förderrichtung (F) des Werkstücks (1) hintereinander angeordnet sind, sodass eine Stirnkante (4) und/oder Ecke (5) einer in Förderrichtung (F) vorlaufenden Seite (2) des Werkstücks (1) mit der in Förderrichtung (F) vorderen Bearbeitungseinrichtung (19) und eine Stirnkante (7) und/oder Ecke (6) einer in Förderrichtung (F) nachlaufenden Seite (3) des Werkstücks (1) mit der anderen Bearbeitungseinrichtung (18) bearbeitet werden kann.

6. Vorrichtung (10) nach einem der vorhergehenden Ansprüche, bei der mindestens eine, insbesondere beide, Bearbeitungseinrichtungen (18, 19) eine Tasteinrichtung (21), insbesondere Tastrolle, zum Führen eines Bearbeitungswerkzeugs (20) der Bearbeitungseinrichtung (18; 19) mit einem konstanten Abstand zum Werkstück (1) aufweisen.

7. Vorrichtung (10) nach Anspruch 6, bei welcher die Tasteinrichtung (21) so ausgestaltet ist, dass der Abstand bevorzugt mittels eines Antriebs verstellbar ist.

8. Vorrichtung (10) nach Anspruch 7, bei der die Verstellung translatorisch, bevorzugt senkrecht zur Ebene der Werkstückauflage und besonders bevorzugt parallel zur Förderrichtung (F) erfolgen kann.

9. Vorrichtung (10) nach einem der Ansprüche 7 und 8, bei der die Verstellung während der Bearbeitung erfolgen kann.

10. Verfahren zum Bearbeiten von Stirnkanten (4, 7) und/oder Ecken (5, 6) eines plattenförmigen Werkstücks (1), das bevorzugt zumindest abschnittsweise aus Holz, Holzwerkstoff, Kunststoff oder dergleichen ausgebildet ist, unter Verwendung einer Vorrichtung (10) nach einem der Ansprüche 1 bis 9, umfassend
Fördern des Werkstücks (1) in eine Förderrichtung (F) mit der Fördereinrichtung;
Bearbeiten einer Stirnkante (4) und/oder Ecke (5) der in Förderrichtung (F) vorlaufenden Werkstückseite (2) mit einer der beiden Bearbeitungseinrichtungen (19); und
Bearbeiten der Stirnkante (7) und/oder Ecke (6) der in Förderrichtung (F) nachlaufenden Werkstückseite (3) mit der anderen Bearbeitungseinrichtung (18);
wobei die Bearbeitung der beiden Stirnkanten (4, 7) und/oder Ecken (5, 6) erfolgt, während das Werkstück (1) durch die Fördereinrichtung in die Förderrichtung (F) gefördert wird.

## Claims

1. Apparatus (10) for machining edge faces (4, 7) and/or corners (5, 6) of a panel-formed workpiece (1) which is preferably formed at least partially from wood, wood-based material, plastic or the like, having:
two machining devices (18, 19), each designed to machine an edge face (4; 7) and/or corner (5; 6) of the workpiece (1);
a conveying device for inducing a relative movement between the workpiece (1) and the machining devices (18, 19) in a conveying direction (F);
wherein the apparatus (10) is designed to machine different, preferably opposite, edge faces (4, 7) and/or corners (5, 6) of the workpiece (1) using the two machining devices (18, 19);
wherein the apparatus (10) also has a single support device (12) on which both machining devices (18, 19) are provided,
**characterised in that** the support device (12) is designed to be moveable along the conveying direction (F) of the workpiece (1).

2. Apparatus (10) according to claim 1, wherein the advancing movement of the support device can be driven along the conveying direction (F).

3. Apparatus (10) according to claim 2, wherein the advancing movement of the support device (12) is pneumatically and/or electrically driveable.

4. Apparatus (10) according to one of the preceding claims, wherein the machining devices (18, 19) are jointly moveable along the support device (12), preferably perpendicular to the conveying direction (F), wherein the traversing movement is preferably driveable.

5. Apparatus (10) according to one of the preceding claims, wherein the machining devices (18, 19) are arranged in succession in the conveying direction (F) of the workpiece (1), so that an edge face (4) and/or corner (5) of a leading side (2) of the workpiece (1), in the conveying direction (F), can be machined with the front machining device (19), in the conveying direction (F), and an edge face (7) and/or corner (6) of a trailing side (3) of the workpiece (1), in the conveying direction (F), can be machined with the other machining device (18).

6. Apparatus (10) according to one of the preceding claims, wherein at least one, in particular both, machining devices (18, 19) have a sensing device (21), in particular a sensing roller, for guiding a machining tool (20) of the machining device (18; 19) at a constant distance from the workpiece (1).

7. Apparatus (10) according to claim 6, wherein the sensing device (21) is designed such that the distance is preferably adjustable by means of a drive.

8. Apparatus (10) according to claim 7, wherein the adjustment can be made translationally, preferably perpendicular to the plane of the workpiece support and particularly preferably parallel to the conveying direction (F) .

9. Apparatus (10) according to one of the claims 7 and 8, wherein the adjustment can take place during machining.

10. Method for machining edge faces (4, 7) and/or corners (5, 6) of a panel-formed workpiece (1) which is preferably formed at least partially from wood, wood-based material, plastic or the like, using an apparatus (10) according to one of the claims 1 to 9, comprising
conveying the workpiece (1) in a conveying direction (F) with the conveying device;
machining an edge face (4) and/or corner (5) of the leading workpiece side (2), in the conveying direction (F), with one of the two machining devices (19); and
machining the edge face (7) and/or corner (6) of the trailing workpiece side (3), in the conveying direction (F), with the other machining device (18);
wherein the machining of the two edge faces (4, 7) and/or corners (5, 6) takes place while the workpiece (1) is being conveyed by the conveying device in the conveying direction (F).

## Revendications

1. Dispositif (10) pour l'usinage d'arêtes frontales (4, 7) et/ou de coins (5, 6) d'une pièce à usiner (1) en forme de plaque, qui est de préférence réalisée au moins par sections en bois, en matériau dérivé du bois, en matière plastique ou similaire :
deux appareils d'usinage (18, 19) qui sont réalisés chacun pour l'usinage d'une arête frontale (4 ; 7) et/ou d'un coin (5 ; 6) de la pièce à usiner (1) ;
un appareil de transport pour provoquer un mouvement relatif entre la pièce à usiner (1) et les appareils d'usinage (18, 19) dans une direction de transport (F) ;
dans lequel le dispositif (10) est conçu pour usiner avec les deux appareils d'usinage (18, 19) différentes arêtes frontales (4, 7) et/ou coins (5, 6), de préférence opposés, de la pièce à usiner (1) ;
dans lequel le dispositif (10) présente en outre un seul appareil de support (12) sur lequel les deux appareils d'usinage (18, 19) sont prévus,
**caractérisé en ce que** l'appareil de support (12) est prévu de manière à pouvoir être déplacé le long de la direction de transport (F) de la pièce à usiner (1).

2. Dispositif (10) selon la revendication 1, dans lequel le mouvement de translation de l'appareil de support peut être entraîné le long de la direction de transport (F).

3. Dispositif (10) selon la revendication 2, dans lequel le mouvement de translation de l'appareil de support (12) peut être entraîné pneumatiquement et/ou électriquement.

4. Dispositif (10) selon l'une quelconque des revendications précédentes, dans lequel les appareils d'usinage (18, 19) sont prévus pour pouvoir se déplacer ensemble le long de l'appareil de support (12), de préférence perpendiculairement à la direction de transport (F), dans lequel le mouvement de translation peut de préférence être entraîné.

5. Dispositif (10) selon l'une quelconque des revendications précédentes, dans lequel les appareils d'usinage (18, 19) sont agencés l'un derrière l'autre dans la direction de transport (F) de la pièce à usiner (1), de sorte qu'une arête frontale (4) et/ou un coin (5) d'un côté (2) de la pièce à usiner (1) situé en amont dans la direction de transport (F) peut être usiné(e) avec l'appareil d'usinage (19) situé en amont dans la direction de transport (F) et une arête frontale (7) et/ou un coin (6) d'un côté (3) de la pièce à usiner (1) situé en aval dans la direction de transport (F) peut être usiné(e) avec l'autre appareil d'usinage (18).

6. Dispositif (10) selon l'une quelconque des revendications précédentes, dans lequel au moins un, en particulier les deux, appareils d'usinage (18, 19) présentent un appareil de palpage (21), en particulier un rouleau palpeur, pour guider un outil d'usinage (20) de l'appareil d'usinage (18 ; 19) à une distance constante de la pièce à usiner (1).

7. Dispositif (10) selon la revendication 6, dans lequel l'appareil de palpage (21) est configuré de telle sorte que la distance est réglable de préférence au moyen d'un entraînement.

8. Dispositif (10) selon la revendication 7, dans lequel le réglage peut être effectué en translation, de préférence perpendiculairement au plan du support de pièce à usiner et le plus préférentiellement parallèlement à la direction de transport (F).

9. Dispositif (10) selon l'une quelconque des revendications 7 et 8, dans lequel le réglage peut être effectué pendant l'usinage.

10. Procédé d'usinage d'arêtes frontales (4, 7) et/ou de coins (5, 6) d'une pièce à usiner (1) en forme de plaque, qui est réalisée de préférence au moins par sections en bois, en matériau dérivé du bois, en matière plastique ou similaire, en utilisant un dispositif (10) selon l'une quelconque des revendications 1 à 9, comprenant les étapes consistant à
transporter la pièce (1) dans une direction de transport (F) avec l'appareil de transport ;
usiner une arête frontale (4) et/ou un coin (5) du côté de la pièce à usiner (2) avançant dans la direction de transport (F) avec l'un des deux appareils d'usinage (19) ; et
usiner l'arête frontale (7) et/ou le coin (6) du côté de la pièce à usiner (3) qui suit dans la direction de transport (F) avec l'autre appareil d'usinage (18) ;
dans lequel l'usinage des deux arêtes frontales (4, 7) et/ou des coins (5, 6) s'effectue pendant que la pièce à usiner (1) est transportée par l'appareil de transport dans la direction de transport (F).
